# EUROPEAN PATENT SPECIFICATION

(11) **EP 2 661 083 B1**
(45) Date of publication and mention of the grant of the patent: **15.03.2017**
(21) Application number: 13164888.3
(22) Date of filing: 23.04.2013
(51) Int. Cl.: H04N 19/132, H04N 19/137, H04N 19/172, G06F 3/14, H04N 19/162

(54) **Video encoding system, method and computer readable medium thereof**
Videokodierungssystem, Verfahren und computerlesbares Medium dafür
Système de codage vidéo, procédé et support lisible par ordinateur correspondant

(30) Priority: 04.05.2012 TW 101115966
(43) Date of publication of application: 06.11.2013
(73) Proprietor: Awind Inc., 235 New Taipei City (TW)
(72) Inventor: Chang, Kuo-Lung, 235 New Taipei City (TW); Wang, Hsing-Yung, 235 New Taipei City (TW); Lu-chen, Way, 235 New Taipei City (TW); Chou, Kuan-Yu, 235 New Taipei City (TW); Hung, Meng-Chung, 235 New Taipei City (TW)
(74) Representative: Viering, Jentschura & Partner mbB Patent- und Rechtsanwälte

(56) References cited:
- US-A1- 2010 226 441
- US-A1- 2011 103 465
- US-B1- 7 667 707
- RICHARDSON T ET AL: "Virtual Network Computing", IEEE INTERNET COMPUTING, IEEE SERVICE CENTER, US, vol. 2, no. 1, 1 January 1998 (1998-01-01) , pages 33-38, XP002287085, ISSN: 1089-7801, DOI: 10.1109/4236.656066

## Description

### BACKGROUND OF THE INVENTION

### 1. FIELD OF THE INVENTION

The present invention relates to a video encoding system, method and a computer readable medium, and more particularly to a video encoding system, method and a computer readable medium applied to a remote desktop system.

### 2. DESCRIPTION OF THE PRIOR ART

Screen sharing is one important application for information technology, for example, using remote desktop to perform remote control or connecting a computer to a projector for briefing by wireless means. In this technical field, screen frames are obtained by the operation system through software programs and there is no distortion. However, because of bandwidth limitation, screen frames must be encoded to reduce data size for transmission.

Conventionally, transmit end of the remote desktop captures and encodes screen frames at a rate of 24fps (frame per second) to 30fps to let remote users have better experience in real-time control. However, more system resources are occupied when the transmit end continually captures and encodes screen frames at the same rate. It also causes more energy-consumption.

Hence, it is necessary to develop a method to reduce system resources used by the transmit end of the remote desktop system when encoding and to reduce energy consumption.

US 2010/226441 A1 (TUNG JACKSON [US] ET AL), published 9 September 2010, discloses a remote desktop system, wherein the frame capture rate may be reduced if the system determines that the network is congested. Further, a frame differencing module detects if a current frame exhibits no changes with respect to the previous frame and in that case skips encoding and transmission of the current frame in order to reduce processing requirements.

Likewise, US 7 667 707 B1 (MARGULIS NEAL D [US]), published 23 February 2010, discloses a remote desktop system, wherein encoding is skipped for unchanged frames detected by a frame comparer. Additionally, a tracking is performed to detect indicators of frame updates (such as e.g. Graphic Device Interface calls or video playback related functions), which may be used to reduce the need to send unchanged frames to the frame comparer.

RICHARDSON T ET AL: "Virtual Network Computing", IEEE INTERNET COMPUTING, IEEE SERVICE CENTER, US, vol. 2, no. 1, published in January 1998, pages 33-38, DOI: 10.1109/4236.656066, reviews features of the Virtual Network Computing (VNC) protocol useable for remote desktop systems. Said protocol foresees that Human Interface Device events (such as pressed keys or moved pointing devices) are sent from the client to the server to trigger an update comprising all screen changes since the previous update request.

US 2011/103465 A1 (CHANG KUO-LUNG [TW] ET AL), published 5 May 2011, discloses the detection of frame changes via a pixel-wise exclusive OR operation between consecutive screen frames to be applied in remote desktop systems.

### SUMMARY OF THE INVENTION

The present invention is directed to a video encoding system, method and a computer readable medium. It determines whether the screen frames change or not and thereby adjusting encoding rate and/or capture rate. As a result, system resources usage and energy consumption are dramatically reduced when no changes occur in screen frames.

According to one embodiment of the present invention, a video encoding system applied to a remote desktop system comprises a capture module, an encoding module, an estimating module, and a detection module. The capture module is configured for capturing a plurality of screen frames from an electronic device at a capture rate. The encoding module is configured for encoding the screen frames captured by the capture module at an encoding rate. The estimating module is configured for determining whether the current screen frame changes or not by comparing each pixel of the current screen frame with the corresponding pixel of the previous screen frame by an exclusive OR operation and then adjusting the capture rate of the capture module according to an estimating result. In this case, the capture rate is decreased when the current screen frame does not change, the capture rate is increased when the current screen frame changes and the encoding rate is equal to or less than the capture rate. The detection module is configured for detecting an input signal of a human interface device to determine whether the electronic device is operated, wherein the capture module is restored to capture the screen frame when the electronic device is operated and the capture rate has been decreased to 0 fps.

According to another embodiment of the present invention, a video encoding method applied to a remote desktop system comprises: capturing a plurality of screen frames of an electronic device at a capture rate; encoding the screen frame at an encoding rate; determining whether the current screen frame changes or not by comparing each pixel of the current screen frame with the corresponding pixel of the previous screen frame by an exclusive OR operation and then adjusting the capture rate according to an estimating result, wherein the capture rate is decreased when the current screen frame does not change, the capture rate is increased when the current screen frame changes and the encoding rate is equal to or less than the capture rate; and detecting an input signal of a human interface device to determine whether the electronic device is operated, wherein capturing the screen frame is restored when the electronic device is operated and the capture rate has been decreased to 0 fps.

According to another embodiment of the present invention, a computer readable medium is configured for storing a computer program and the computer program is used to be loaded by an electronic device to execute a video encoding method applied to the remote desktop system. The video encoding method comprises: capturing a plurality of screen frames of the electronic device at a capture rate; encoding the screen frame at an encoding rate; determining whether the current screen frame changes or not by comparing each pixel of the current screen frame with the corresponding pixel of the previous screen frame by an exclusive OR operation and then adjusting the capture rate according to an estimating result, wherein the capture rate is decreased when the current screen frame does not change, the capture rate is increased when the current screen frame changes and the encoding rate is equal to or less than the capture rate; and detecting an input signal of a human interface device to determine whether the electronic device is operated, wherein capturing the screen frame is restored when the electronic device is operated and the capture rate has been decreased to 0 fps.

The objective, technologies, features and advantages of the present invention will become apparent from the following description in conjunction with the accompanying drawings wherein certain embodiments of the present invention are set forth by way of illustration and example.

### BRIEF DESCRIPTION OF THE DRAWINGS

The foregoing conceptions and their accompanying advantages of this invention will become more readily appreciated after being better understood by referring to the following detailed description, in conjunction with the accompanying drawings, wherein:
Fig. 1 is a block diagram schematically illustrating a video encoding system according one embodiment of the present invention;
Fig. 2 is a block diagram schematically illustrating a video encoding system according another embodiment of the present invention;
Fig. 3 is a flowchart schematically illustrating a video encoding method according one embodiment of the present invention;
Fig. 4 is a block diagram schematically illustrating a video encoding system according another embodiment of the present invention; and
Fig. 5 is a block diagram schematically illustrating a video encoding method according another embodiment of the present invention.

### DESCRIPTION OF THE PREFERRED EMBODIMENT

The detailed explanation of the present invention is described as follows. The described preferred embodiments are presented for purposes of illustrations and description, and they are not intended to limit the scope of the present invention.

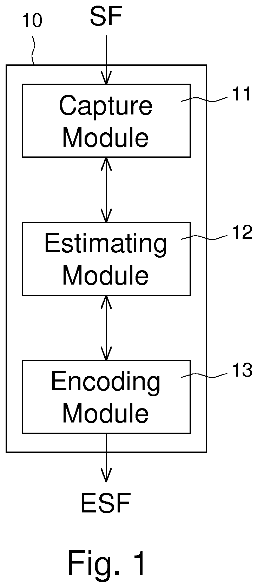

The video encoding system of the present invention is applied to a remote desktop system. Referring to Fig. 1, according to one embodiment of the present invention, a video encoding system 10 comprises a capture module 11, an encoding module 13, and an estimating module 12. The capture module 11 is configured for capturing a plurality of screen frames SF from an electronic device at a capture rate. For example, electronic devices can be desktop computers or mobile internet devices (MID) such as a notebook, a smart phone and a tablet computer. The encoding module 13 is configured for encoding the screen frames SF captured by the capture module 11 at an encoding rate to export an encoded screen frame ESF. The remote desktop system can transmit the encoded screen frames ESF to a remote electronic device to be displayed via internet network or other means of communication.

The estimating module 12 is configured for determining whether the current screen frame SF changes or not and then adjusting the encoding rate of the encoding module 13 according to an estimating result. In one embodiment, the estimating module 12 compares each pixel of the current screen frame SF to the corresponding pixel of the previous screen frame to determine whether the current screen frame changes or not. For example, each pixel of the current screen frame SF can be compared with the corresponding pixel of the previous screen frame by an exclusive OR (XOR) operation to ensure whether the current screen frame changes or not.

In one embodiment of the present invention, when the current screen frame SF does not change, the estimating module 12 decreases the encoding rate of the encoding module 13. For example, initially, the encoding module 13 encodes the screen frame SF at an encoding rate of 24∼30fps. When the estimating module 12 determines that the current screen frame SF does not change, the encoding rate of the encoding module 13 can decrease gradually to 20, 10, 1 or 0fps. It could be understood that when the estimating module 12 determines the current screen frame SF does not change, the encoding rate of the encoding module 13 can decrease directly from 24∼30fps, to 1∼0fps.

In contrast, when the current screen frame SF changes, the estimating module 12 increases the encoding rate of the encoding module 13. For example, when the estimating module 12 determines the current screen frame SF changes, the encoding rate of the encoding module 13 can gradually increase from 0fps or 1fps, to 10, 20, 24∼30fops. It could be understood that in order to let remote users have better experience in real time control, when the estimating module 12 determines the current screen frame changes, the encoding rate of the encoding module 13 can directly increase from 0 or 1fps, to 24∼30fps. In one embodiment, the encoding rate can be adjusted between 0 and 100fps.

It should be noticed that the estimating module 12 also can adjust the capture rate of the capture module 11 according to the estimating result. For example, when the current screen frame SF does not change, the capture rate of the capture module 11 can decrease such like gradually decrease from 24∼30fps to 20, 10, 1 or 0fps. When the current screen frame SF changes, the capture rate of the capture module 11 can increase, for example, increase from 1 or 0fps to 10, 20, 24∼30fps. In one embodiment, the capture rate can be adjusted between 0 and 100fps. In one embodiment, the encoding rate is equal to or less than the capture rate.

Based on the description above, the video encoding system 10 of the present invention can adjust encoding rate and/or capture rate depending on whether the current screen frame changes. Accordingly, system resources usage and energy consumption can be reduced.

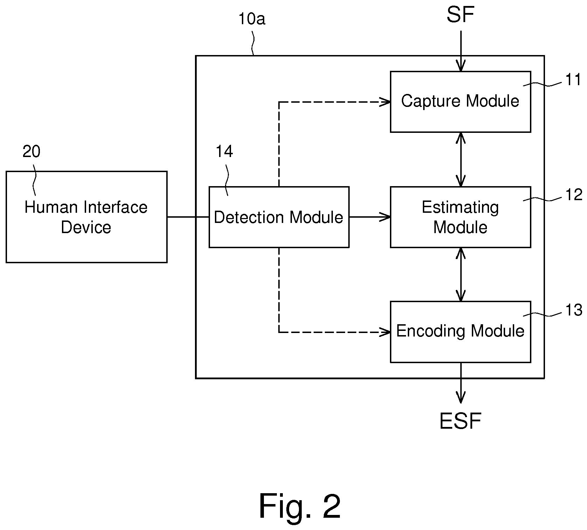

Referring to Fig. 2, according to another embodiment of the present invention, a video encoding system 10a further comprises a detection module 14 to detect an input signal of a human interface device (Human Interface Device, HID) 20 such like a keyboard, a mouse and other input devices to determine whether the electronic device is operated normally. When the electronic device is operated, the detection module 14 can provides proper control signals to increase the capture rate of the capture module 11 and/or the encoding rate of the encoding module 13. For example, the detection module 14 can adjust the capture rate or/and the encoding rate via the estimating module 12, but not limited to this. The detection module 14 also can directly adjust the capture rate of the capture module 11 and/or the encoding rate of the encoding module 13, referring to the dashes as shown in Fig. 2. Based on the description above, when the capture rate decreases to 0fps, the capture module 11 can be restored to capture the screen frame SF according to the detection result of the detection module 14.

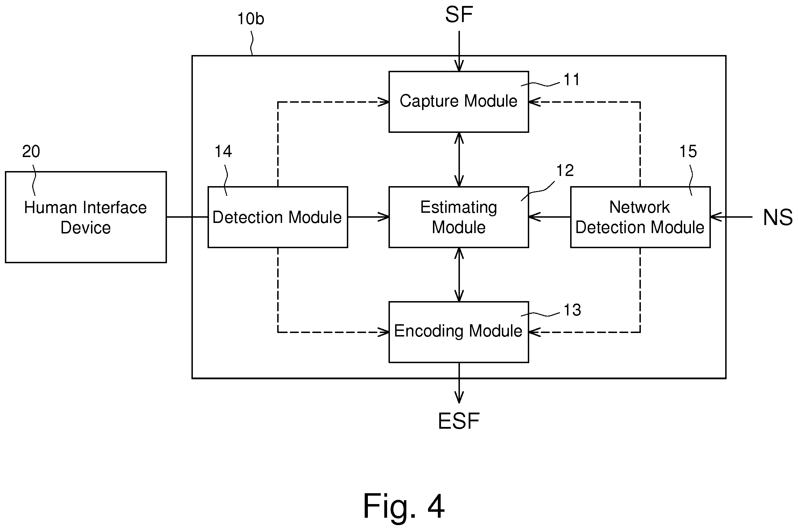

Referring to Fig. 4, the video encoding system 10b further comprises a network detection module 15 configured for detecting network status NS to determine whether the network is congested. When the network is congested, the network detection module 15 provides proper control signals to decrease the capture rate of the capture module 11 and/or the encoding rate of the encoding module 13. Similarly, the network detection module 15 can adjust the capture rate and/or the encoding rate via the estimating module 12, as shown by solid lines in Fig. 4; or the network detection module 15 can directly adjust the capture rate and/or the encoding rate, as shown by dashed lines in Fig. 4. For example, when the network is in the normal condition, the capture rate and/or the encoding rate should be increased if the screen frame changes. However, when the network is congested, the encoded screen frame ESF cannot be transmitted to the receiving end. To solve this problem, the capture rate and/or the encoding rate can be decreased to reduce system resource usage and energy consumption.

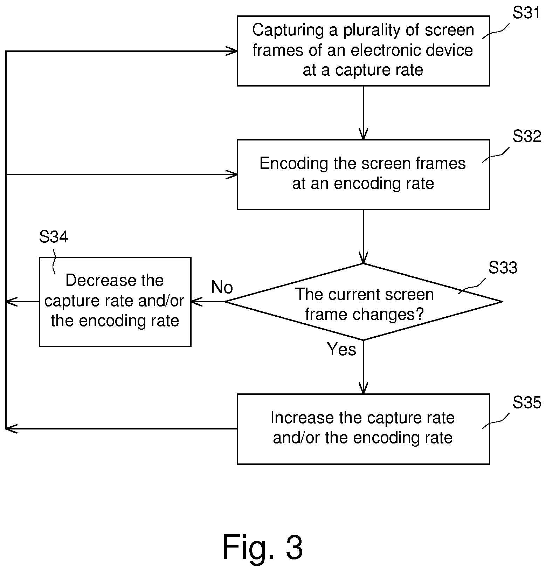

A video encoding method applied to a remote desktop system is also disclosed here. Referring to Fig. 3, according to an embodiment of the present invention, a video encoding method applied to a remote desktop system comprises: capturing a plurality of screen frames of an electronic device at a capture rate (S31); encoding the screen frame at an encoding rate (S32); and determining whether the current screen frame changes or not and then adjusting the capture rate and/or the encoding rate according to an estimating result (S33). For instance, when the current screen frame does not change, decrease the capture rate and/or the encoding rate (S34) and reset the capture rate in the step S31 and/or the encoding rate in the step 32. In contrast, when the current screen frame changes, increase the capture rate and/or the encoding rate (S35) and reset the capture rate in the step S31 and/or the encoding rate in the step S32. Technical details are described before and will not be elaborated here.

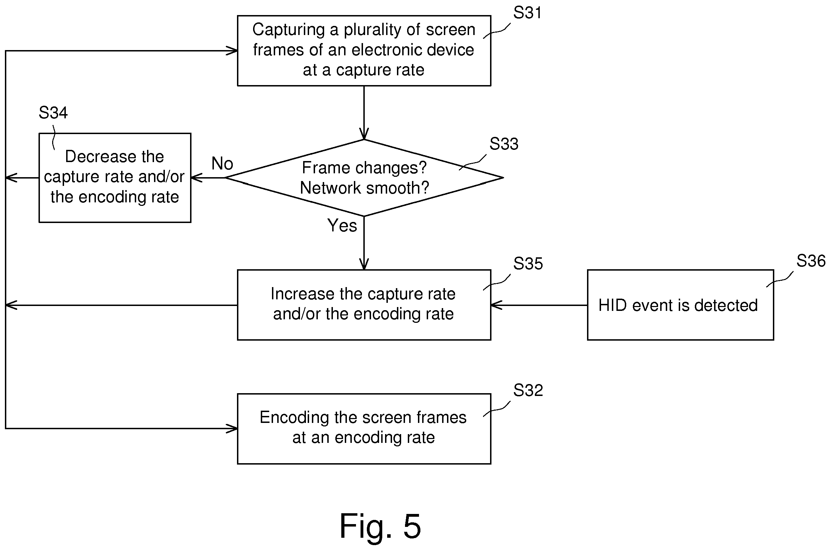

In one embodiment, referring to Fig. 5, a video encoding method further comprises detecting an input signal of a human interface device (HID) to determine whether the electronic device is operated; if an HID event is detected (S36), the capture rate and/or the encoding rate are increased. Besides, the step S33 further determines whether the network is congested so as to correspondingly adjust the capture rate and/or the encoding rate. Technical details are described before and will not be elaborated hereinafter. It should be noticed that after the step S31 of capturing the screen frame according to the embodiment shown in Fig. 5, the step S33 immediately determines whether the screen frame changes so as to correspondingly adjust the encoding rate. For example, when the capture rate increases, the encoding module decreases the encoding rate in response. In contrast, when the capture rate increases, the encoding rate increases in response. In other words, the encoding rate can be correspondingly adjusted by adjusting the capture rate.

A computer readable medium is also disclosed here. According to an embodiment of the present invention, a computer readable medium is configured for storing a computer program and the computer program is used to be loaded by an electronic device to execute a video encoding method as shown in Fig. 3 or Fig. 5. The video encoding method of the present invention is described in detail before and will not be elaborated here.

In conclusion, the video encoding system and method of the present invention can adjust encoding rate and/or capture rate depending on whether the current screen frame changes or not. Accordingly, system resources usage and energy consumption can be reduced dramatically when the screen frame does not change. Besides, the video encoding system and method of the present invention also can detect HID event or network status to dynamically adjust the encoding rate and/or capture rate.

While the invention is susceptible to various modifications and alternative forms, a specific example thereof has been shown in the drawings and is herein described in detail. It should be understood, however, that the invention is not to be limited to the particular form disclosed, but to the contrary, the invention is to cover all modifications, equivalents, and alternatives falling within the scope of the appended claims.

## Claims

1. A video encoding system (10a) applied to a remote desktop system, comprising:
a capture module (11) configured for capturing a plurality of screen frames (SF) of an electronic device at a capture rate;
an encoding module (13) configured for encoding the screen frames captured by the capture module (11) at an encoding rate;
an estimating module (12) configured for determining whether the current screen frame changes or not by comparing each pixel of the current screen frame with the corresponding pixel of the previous screen frame by an exclusive OR operation and then adjusting the capture rate of the capture module (11) according to an estimating result, wherein the capture rate is decreased when the current screen frame does not change, the capture rate is increased when the current screen frame changes and the encoding rate is equal to or less than the capture rate; and
a detection module (14) configured for detecting an input signal of a human interface device (20) to determine whether the electronic device is operated, wherein the capture module (11) is restored to capture the screen frame when the electronic device is operated and the capture rate has been decreased to 0 fps.

2. The video encoding system (10a) according to claim 1, wherein the encoding rate is decreased when the current screen frame does not change or the encoding rate is increased when the current screen frame changes.

3. The video encoding system (10a) according to claim 1 further comprising:
a network detection module used for detecting a network status to determine whether the network is congested, wherein the estimating result is ignored and the capture rate is decreased when the network is congested.

4. A video encoding method applied to a remote desktop system, comprising:
capturing a plurality of screen frames of an electronic device at a capture rate;
encoding the screen frames at an encoding rate;
determining whether the current screen frame changes or not by comparing each pixel of the current screen frame with the corresponding pixel of the previous screen frame by an exclusive OR operation and then adjusting the capture rate according to an estimating result, wherein the capture rate is decreased when the current screen frame does not change, the capture rate is increased when the current screen frame changes and the encoding rate is equal to or less than the capture rate; and
detecting an input signal of a human interface device (20) to determine whether the electronic device is operated, wherein capturing the screen frame is restored when the electronic device is operated and the capture rate has been decreased to 0 fps.

5. The video encoding method according to claim 4, wherein the encoding rate is decreased when the current screen frame does not change or the encoding rate is increased when the current screen frame changes.

6. The video encoding method according to claim 4 further comprising:
detecting a network status to determine whether the network is congested, wherein the estimating result is ignored and the capture rate is decreased when the network is congested.

7. A computer readable medium storing a computer program, the computer program is used to be loaded by an electronic device to execute a video encoding method applied to the remote desktop system, wherein the method comprises:
capturing a plurality of screen frames of the electronic device at a capture rate;
encoding the screen frame at an encoding rate;
determining whether the current screen frame changes or not by comparing each pixel of the current screen frame with the corresponding pixel of the previous screen frame by an exclusive OR operation and then adjusting the capture rate according to an estimating result, wherein the capture rate is decreased when the current screen frame does not change, the capture rate is increased when the current screen frame changes and the encoding rate is equal to or less than the capture rate; and
detecting an input signal of a human interface device (20) to determine whether the electronic device is operated, wherein capturing the screen frame is restored when the electronic device is operated and the capture rate has been decreased to 0 fps.

8. The computer readable medium according to claim 7, wherein the encoding rate is decreased when the current screen frame does not change or the encoding rate is increased when the current screen frame changes.

9. The computer readable medium according to claim 7 further comprising :
detecting a network status to determine whether the network is congested, wherein the estimating result is ignored and the capture rate is decreased when the network is congested.

## Patentansprüche

1. Videokodierungssystem (10a), angewendet auf ein Remote-Desktop System, umfassend:
ein Erfassungsmodul (11), das ausgebildet ist zur Erfassung einer Mehrzahl von Bildschirmframes (SF) eines elektronischen Geräts in einer Erfassungsrate;
ein Kodierungsmodul (13), das ausgebildet ist zur Kodierung der durch das Erfassungsmodul (11) erfassten Bildschirmframes in einer Kodierungsrate;
ein Schätzmodul (12), das ausgebildet ist zur Bestimmung, ob der derzeitige Bildschirmframe sich ändert oder nicht, durch Vergleichen jedes Pixels des derzeitigen Bildschirmframe mit dem entsprechenden Pixel des vorhergehenden Bildschirmframes durch eine Exklusive-ODER-Operation und dann Einstellen der Erfassungsrate des Erfassungsmoduls (11) entsprechend eines Schätzergebnisses, wobei die Erfassungsrate verringert wird, wenn der derzeitige Bildschirmframe sich nicht ändert, die Erfassungsrate erhöht wird, wenn der derzeitige Bildschirmframe sich ändert und die Kodierungsrate gleich oder kleiner als die Erfassungsrate ist; und
ein Detektionsmodul (14), das ausgebildet ist zur Detektion eines Eingangssignals eines menschlichen Schnittstellengeräts (20), um zu bestimmen, ob das elektronische Gerät betrieben wird, wobei das Erfassungsmodul (11) zurückgestellt wird, um den Bildschirmframe zu erfassen, wenn das elektronische Gerät betrieben wird und die Erfassungsrate auf 0 fps verringert wurde.

2. Videokodierungssystem (10a) nach Anspruch 1, wobei die Kodierungsrate reduziert wird, wenn der derzeitige Bildschirmframe sich nicht verändert, oder die Kodierungsrate erhöht wird, wenn der aktuelle Rahmen sich ändert.

3. Videokodierungssystem (10a) nach Anspruch 1 ferner umfassend: ein Netzwerkdetektionsmodul, das zur Detektion eines Netzwerksstatus verwendet wird, um zu bestimmen, ob das Netzwerk überfüllt ist, wobei das Schätzergebnis ignoriert wird und die Erfassungsrate reduziert wird, wenn das Netzwerk überfüllt ist.

4. Videokodierungsverfahren, angewendet auf ein Remote-Desktop System, umfassend:
Erfassen einer Mehrzahl von Bildschirmframes eines elektronischen Geräts in einer Erfassungsrate;
Kodieren der Bildschirmframes in einer Kodierungsrate;
Bestimmen, ob der derzeitige Bildschirmframe sich ändert oder nicht, durch vergleichen jedes Pixels des derzeitigen Bildschirmframe mit dem entsprechenden Pixel des vorhergehenden Bildschirmframes durch eine Exklusive-ODER-Operation und dann einstellen der Erfassungsrate entsprechend eines Schätzergebnisses, wobei die Erfassungsrate verringert wird, wenn der derzeitige Bildschirmframe sich nicht ändert, die Erfassungsrate erhöht wird, wenn der derzeitige Bildschirmframe sich ändert und die Kodierungsrate gleich oder kleiner als die Erfassungsrate ist; und
Detektieren eines Eingangssignals eines menschlichen Schnittstellengeräts (20), um zu bestimmen, ob das elektronische Gerät betrieben wird, wobei Erfassen der Bildschirmframes zurückgestellt wird, um den Bildschirmframe zu erfassen, wenn das elektronische Gerät betrieben wird und die Erfassungsrate auf 0 fps verringert wurde.

5. Videokodierungsverfahren nach Anspruch 4, wobei die Kodierungsrate reduziert wird, wenn der derzeitige Bildschirmframe sich nicht verändert, oder die Kodierungsrate erhöht wird, wenn der aktuelle Rahmen sich ändert.

6. Videokodierungsverfahren nach Anspruch 4 ferner umfassend: detektieren eines Netzwerkstatus, um zu bestimmen, ob das Netzwerk überfüllt ist, wobei das Schätzergebnis ignoriert wird und die Erfassungsrate reduziert wird, wenn das Netzwerk überfüllt ist.

7. Computerlesbares Medium, das ein Computerprogramm speichert, wobei das Computerprogramm verwendet wird, um von einem elektronischen Gerät geladen zu werden, um ein Videokodierungsverfahren, das auf ein Remote-Desktop System angewendet wird auszuführen, wobei das Verfahren umfasst:
Erfassen einer Mehrzahl von Bildschirmframes eines elektronischen Geräts in einer Erfassungsrate;
Kodieren der Bildschirmframes in einer Kodierungsrate;
Bestimmen, ob der derzeitige Bildschirmframe sich ändert oder nicht, durch vergleichen jedes Pixels des derzeitigen Bildschirmframe mit dem entsprechenden Pixel des vorhergehenden Bildschirmframes durch eine Exklusive ODER Operation und dann einstellen der Erfassungsrate entsprechend eines Schätzergebnisses, wobei die Erfassungsrate verringert wird, wenn der derzeitige Bildschirmframe sich nicht ändert, die Erfassungsrate erhöht wird, wenn der derzeitige Bildschirmframe sich ändert und die Kodierungsrate gleich oder kleiner als die Erfassungsrate ist; und
Detektieren eines Eingangssignals eines menschlichen Schnittstellengeräts (20), um zu bestimmen, ob das elektronische Gerät betrieben wird, wobei Erfassen der Bildschirmframes zurückgestellt wird, um den Bildschirmframe zu erfassen, wenn das elektronische Gerät betrieben wird und die Erfassungsrate auf 0 fps verringert wurde.

8. Computerlesbares Medium nach Anspruch 7, wobei die Kodierungsrate reduziert wird, wenn der derzeitige Bildschirmframe sich nicht verändert, oder die Kodierungsrate erhöht wird, wenn der aktuelle Rahmen sich ändert.

9. Computerlesbares Medium nach Anspruch 7 ferner umfassend: detektieren eines Netzwerkstatus, um zu bestimmen, ob das Netzwerk überfüllt ist, wobei das Schätzergebnis ignoriert wird und die Erfassungsrate reduziert wird, wenn das Netzwerk überfüllt ist.

## Revendications

1. Système de codage vidéo (10a) appliqué à un système de bureau distant, comprenant :
un module de capture (11) configuré de manière à capturer une pluralité de trames d'écran (SF) d'un dispositif électronique à un taux de capture ;
un module de codage (13) configuré de manière à coder les trames d'écran capturées par le module de capture (11) à un taux de codage ;
un module d'estimation (12) configuré de manière à déterminer si la trame d'écran en cours change ou non, en comparant chaque pixel de la trame d'écran en cours au pixel correspondant de la trame d'écran précédente par une opération booléenne « OU exclusif », et à ajuster ensuite le taux de capture du module de capture (11) selon un résultat d'estimation, dans lequel le taux de capture est diminué lorsque la trame d'écran en cours ne change pas, le taux de capture est augmenté lorsque la trame d'écran en cours change, et le taux de codage est égal ou inférieur au taux de capture ; et
un module de détection (14) configuré de manière à détecter un signal d'entrée d'un dispositif d'interface humaine (20) en vue de déterminer si le dispositif électronique est exploité, dans lequel le module de capture (11) est rétabli en vue de capturer la trame d'écran lorsque le dispositif électronique est exploité et lorsque le taux de capture a été réduit à 0 trame par seconde, fps.

2. Système de codage vidéo (10a) selon la revendication 1, dans lequel le taux de codage est diminué lorsque la trame d'écran en cours ne change pas ou le taux de codage est augmenté lorsque la trame d'écran en cours change.

3. Système de codage vidéo (10a) selon la revendication 1, comportant en outre :
un module de détection de réseau utilisé pour détecter un état de réseau en vue de déterminer si le réseau est encombré, dans lequel le résultat d'estimation est ignoré et le taux de capture est diminué lorsque le réseau est encombré.

4. Procédé de codage vidéo appliqué à un système de bureau distant, comprenant les étapes ci-dessous consistant à :
capturer une pluralité de trames d'écran d'un dispositif électronique à un taux de capture ;
coder les trames d'écran à un taux de codage ;
déterminer si la trame d'écran en cours change ou non, en comparant chaque pixel de la trame d'écran en cours au pixel correspondant de la trame d'écran précédente par une opération booléenne « OU exclusif », et ajuster ensuite le taux de capture selon un résultat d'estimation, dans lequel le taux de capture est diminué lorsque la trame d'écran en cours ne change pas, le taux de capture est augmenté lorsque la trame d'écran en cours change, et le taux de codage est égal ou inférieur au taux de capture ; et
détecter un signal d'entrée d'un dispositif d'interface humaine (20) en vue de déterminer si le dispositif électronique est exploité, dans lequel la capture de la trame d'écran est rétablie lorsque le dispositif électronique est exploité et lorsque le taux de capture a été réduit à 0 trame par seconde, fps.

5. Procédé de codage vidéo selon la revendication 4, dans lequel le taux de codage est diminué lorsque la trame d'écran en cours ne change pas ou le taux de codage est augmenté lorsque la trame d'écran en cours change.

6. Procédé de codage vidéo selon la revendication 4, comprenant en outre l'étape ci-dessous consistant à :
détecter un état de réseau en vue de déterminer si le réseau est encombré, dans lequel le résultat d'estimation est ignoré et le taux de capture est diminué lorsque le réseau est encombré.

7. Support lisible par ordinateur stockant un programme informatique, dans lequel le programme informatique est utilisé de manière à être chargé par un dispositif électronique en vue d'exécuter un procédé de codage vidéo appliqué au système de bureau distant, dans lequel le procédé comprend les étapes ci-dessous consistant à :
capturer une pluralité de trames d'écran du dispositif électronique à un taux de capture ;
coder les trames d'écran à un taux de codage ;
déterminer si la trame d'écran en cours change ou non, en comparant chaque pixel de la trame d'écran en cours au pixel correspondant de la trame d'écran précédente par une opération booléenne « OU exclusif », et ajuster ensuite le taux de capture selon un résultat d'estimation, dans lequel le taux de capture est diminué lorsque la trame d'écran en cours ne change pas, le taux de capture est augmenté lorsque la trame d'écran en cours change, et le taux de codage est égal ou inférieur au taux de capture ; et
détecter un signal d'entrée d'un dispositif d'interface humaine (20) en vue de déterminer si le dispositif électronique est exploité, dans lequel la capture de la trame d'écran est rétablie lorsque le dispositif électronique est exploité et lorsque le taux de capture a été réduit à 0 trame par seconde, fps.

8. Support lisible par ordinateur selon la revendication 7, dans lequel le taux de codage est diminué lorsque la trame d'écran en cours ne change pas ou le taux de codage est augmenté lorsque la trame d'écran en cours change.

9. Support lisible par ordinateur selon la revendication 7, comprenant en outre :
la détection d'un état de réseau en vue de déterminer si le réseau est encombré, dans lequel le résultat d'estimation est ignoré et le taux de capture est diminué lorsque le réseau est encombré.
